# DEMANDE DE BREVET EUROPEEN

(11) **EP 1 515 136 A1**
(43) Date de publication de la demande: **16.03.2005**
(21) Numéro de dépôt: 03020751.8
(22) Date de dépôt: 12.09.2003
(51) Int. Cl.: G01N 27/30

(54) **Electrodes à revêtement en platine modifié et procédé d'obtention d'un tel revêtement**

(71) Demandeur: UNIVERSITE DE NEUCHATEL, 2007 Neuchatel (CH)
(72) Inventeur: Van der Wal, Peter D., 2000 Neuchâtel (CH); Koudelka-Hep, Milena, 2000 Neuchâtel (CH); De Rooij, Nicolaas Frans, 2000 Neuchâtel (CH)
(74) Mandataire: Thérond, Gérard Raymond

(57) **Abrégé**

Pour augmenter le coefficient de rugosité du revêtement jusqu'à une valeur comprise entre 25 et 50, le film de platine est recouvert d'une couche d'aluminium en excès, puis est soumis à un traitement thermique à une température comprise entre 150°C et 250°C pendant 4 à 16h. l'aluminium résiduel étant ensuite éliminé par attaque chimique pour laisser apparaître une surface d'aspect brun dû à la formation d'un alliage entre le platine et l'aluminium.

## Description

La présente invention concerne des électrodes, notamment pour capteurs électrochimiques de petites dimensions, à la surface desquelles est formé un revêtement en platine modifié de façon à augmenter la sensibilité et la fiabilité desdits capteurs. L'invention concerne également un procédé permettant d'obtenir un tel revêtement.

Dans les capteurs électrochimiques, il est bien connu d'avoir à la surface externe des électrodes un revêtement en métal noble, tel que le platine, pour bénéficier à la fois de ses propriétés catalytiques et de sa résistance à la corrosion et aux attaques chimiques. De tels capteurs peuvent en effet être utilisés dans un environnement hostile pour mesurer la concentration d'une entité chimique ou biologique par des méthodes voltammétrique, ampérométrique, conductométrique ou autres.

Pour améliorer la sensibilité des capteurs, jusqu'à pouvoir détecter des entités chimiques ou biologiques à l'état des traces, il est également bien connu d'agir sur certains paramètres de construction des électrodes, en particulier en diminuant leur résistivité pour faciliter le transfert d'électrons et/ou en augmentant leur surface active, ce qui permet de réduire les effets de polarisation des capteurs conductométriques et d'augmenter le signal des capteurs ampérométriques.

Pour augmenter la surface active des électrodes sans en augmenter la taille, divers procédés ont été proposés pour augmenter le coefficient de rugosité.

Le procédé le plus utilisé consiste à effectuer un dépôt galvanique de platine brillant ou de platine noir conduisant à la formation d'un état de surface de type dendritique permettant d'augmenter la surface active d'un facteur supérieur ou égal à 100. La structure dendritique a toutefois l'inconvénient d'être fragile et d'être évanescente sur les bords de la surface traitée. De plus, lorsque ces capteurs de petites dimensions sont fabriqués, pour des raisons économiques, en lot sur une unique plaquette il est assez difficile d'obtenir une parfaite homogénéité de la structure dendritique, et de protéger correctement les zones de contact qui connectent les capteurs les uns aux autres et qui doivent ensuite être découpées avec précision.

On trouve également dans la littérature un autre procédé décrit pas Harris K.D. et Al ("Fabrication of porous platinum thin films for hydrocarbon sensor applications" Sensor and Materials, 13 (2001) 225-234) consistant à faire un dépôt en incidence rasante ("GLAD", glancing angle deposition). Pendant le dépôt de platine, la cible est positionnées pour former un angle supérieur à 80° par rapport au faisceau incident et le substrat est porté à une température de l'ordre de 600°C. Un tel procédé ne convient évidement pas pour des substrats sensibles aux températures trop élevées.

On notera enfin que la publication de E. Aschaver et al ("Surface modification of platinum thin film electrodes toward a defined roughness and porosity", J. Electroanal. Chem. 426 (1997) 157-165) décrit un procédé permettant d'obtenir un facteur de rugosité allant jusqu'à 8,85, consistant à déposer par PVD, sur un substrat de platine, et par dessus celle-ci une couche d'aluminium, puis. à chauffer pendant 1 h, et en dernier lieu à éliminer la couche supérficielle par KOH à 10%. A la température la plus élevée mentionnée (350°C) on obtient un coefficient de rugosité de seulement 8,85 après élimination de la couche superficielle d'aluminium.

En dehors de l'effet favorable de l'élévation de température, cette publication ne donne aucune information sur les effets que pourraient produire des variations d'autres paramètres (temps de chauffage, épaisseur relative des couches de Pt et Al) et encore moins sur les conséquences positives ou négatives que produiraient des variations desdits paramètres au niveau de la résistivité. Il sera fait référence de façon plus détaillée à ce document dans la description qui va suivre.

L'invention vise donc à remédier aux inconvénients de l'art antérieur précité en procurant des électrodes à revêtement en platine brun présentant une surface de rugosité élevée obtenue par un procédé faisant intervenir la formation d'un alliage entre le platine et l'aluminium à une température relativement basse.

A cet effet l'invention a pour objet une électrode à revêtement en platine modifié pour augmenter sa rugosité à une valeur comprise entre 25 et 50. Le substrat comportant un film de platine est recouvert d'une couche d'aluminium en excès, puis traité thermiquement à une température comprise entre 150° C et 250° C pendant une durée de 4 à 16h, la couche résiduelle d'aluminium étant ensuite éliminée par attaque chimique en laissant apparaître une surface d'aspect brun dû à la formation d'un alliage entre la platine et l'aluminium.

L'aluminium en excès est constitué par une couche de 5000 Å déposé sur un film de platine ayant une épaisseur comprise entre 750 Å et 3000 Å, de préférence d'environ 1500 Å, en ayant éventuellement préalablement déposé sur le substrat une couche isolante de 3000 Å de SiO₂ et une couche d'accrochage de 200 Å de tantale. Ces dépôts successifs sont par exemple effectués par évaporation par bombardement électronique.

D'autres caractéristiques et avantages de l'invention apparaîtront plus clairement à la lecture de la description détaillée des expériences et mesures effectuées en référence aux courbes annexées dans lesquelles :
- la figure 1 représente un voltammogramme cyclique d'une électrode en platine n'ayant subi aucun traitement thermique;
- la figure 2 représente un voltammogramme cyclique de la même électrode après un traitement thermique à 220° C pendant 16h;
- la figure 3 représente un voltammogramme cyclique de la même électrode après un traitement thermique à 300° C pendant 1 h;
- la figure 4 représente pour une même électrode les courbes de variation de rugosité en fonction de la durée du traitement thermique et de la température;
- la figure 5 représente les variations de résistance en fonction de la température d'un traitement thermique de 2 h pour trois types d'électrodes, et
- la figure 6 représente les variations du coefficient de rugosité pour un traitement thermique à 200° C et à 220° C en fonction de la durée de traitement.

Les résultats expérimentaux qui vont être rapportés ci-après ont été obtenus avec des électrodes formées à partir d'un substrat constitué par une plaquette en silicium sur laquelle on a formé par oxydation thermique une couche isolante de 3000 Å de SiO₂ puis déposé par évaporation par bombardement électronique, successivement 200 Å de tantale pour constituer une couche d'accrochage, le platine avec une épaisseur de 750 Å(électrode "A"), 1500 Å (électrode "B") ou 3000 Å (électrode C), et finalement une couche d'aluminium de 5000 Å pour les trois types d'électrode A, B et C. La plaquette de silicium a été découpée en carrés de 1x1 cm, et les électrodes ainsi obtenues ont été soumises à un traitement thermique en faisant varier la température entre la température ambiante et 350°C, et la durée de traitement entre 1 h et 32h, comme indiqué dans le tableau 1 reporté en fin de description. Ainsi, une électrode A ayant subi le traitement thermique No 8 (200°C pendant 16h) sera désignée par électrode A₈.

Après le traitement thermique, la couche résiduelle d'aluminium est éliminée par attaque chimique au moyen d'un mélange composé d'acides acétique, phosphorique et nitrique, puis l'électrode est montée sur un circuit imprimé.

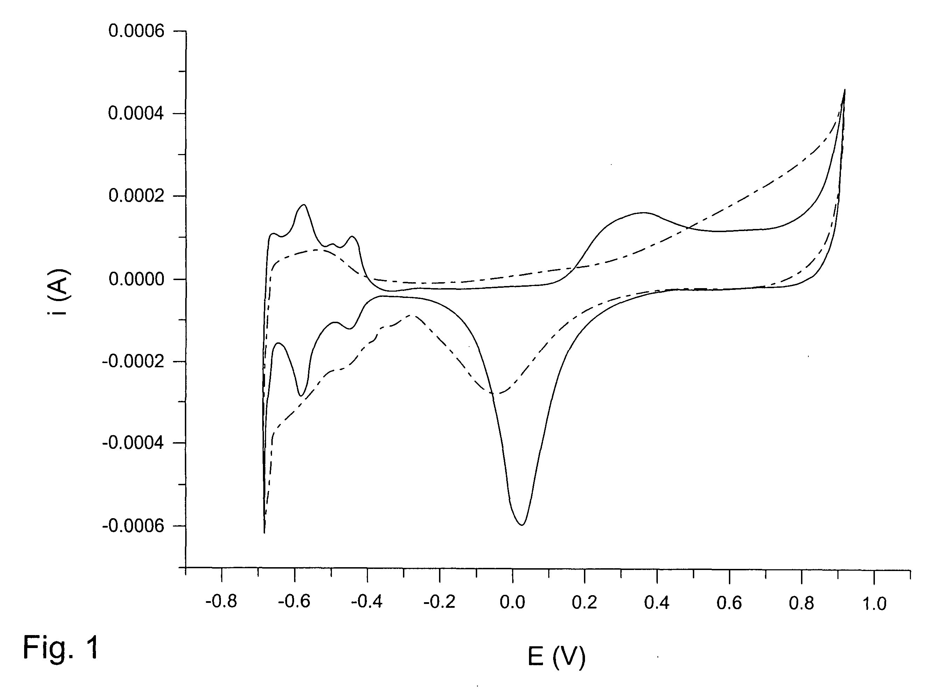

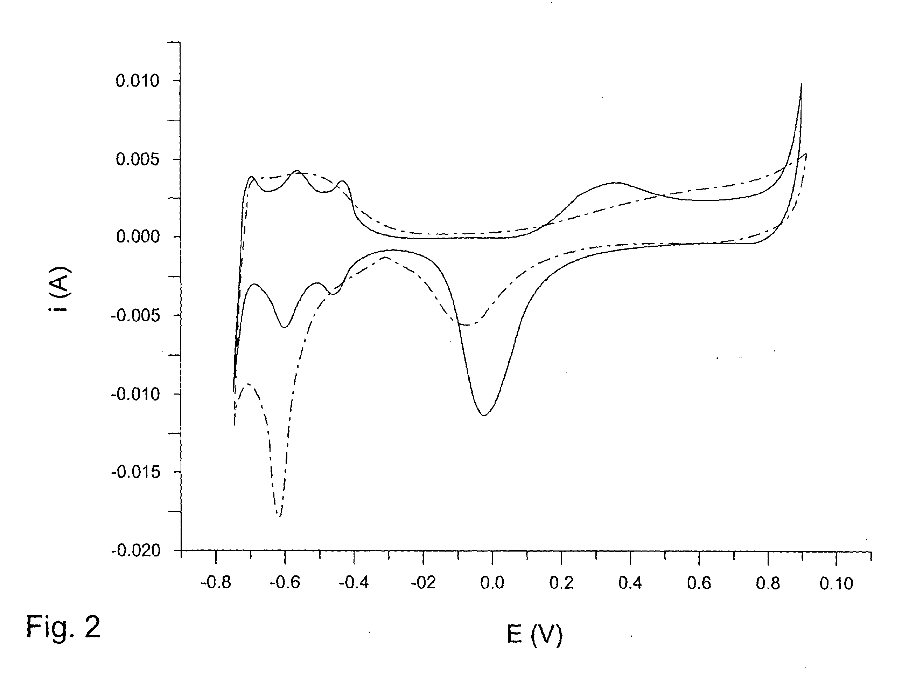

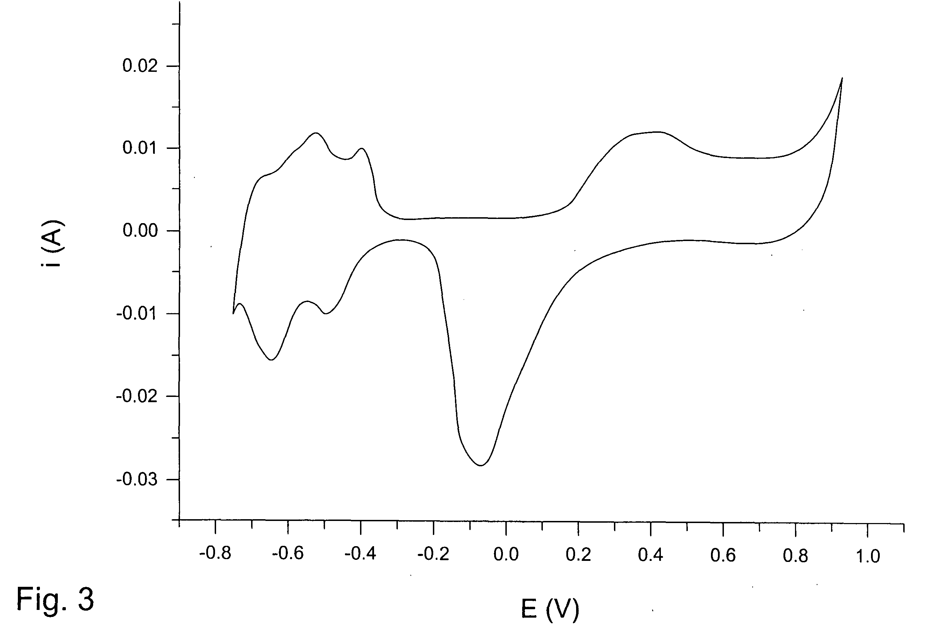

Les mesures de cyclovoltamétrie ont été effectuées dans une solution H₂SO₄ (1M) préalablement soumise pendant 15 minutes à un barbotage d'azote, en utilisant une configuration de cellule à 3 électrodes avec une contre-électrode en platine et électrode de référence (Hg/HgSO₄). Les mesures de voltammétrie cyclique ont été effectuées entre - 0,68 et 0,96 V pour le film de platine non modifié (Figure 1) et entre - 0,75 et 0,95V pour le film de platine brun (figures 2 et 3), avec une vitesse de balayage en potentiel de 100mV/s.

La rugosité de la surface a été établie en mesurant la charge sous les pics voltammétriques de la surface de désorption de l'hydrogène, en effectuant l'intégration entre - 0,63 et - 0,33V pour les électrodes en platine brillant, et entre - 0,68 et - 0,33 pour les électrodes en platine brun. Le facteur de rugosité est déterminé comme étant le quotient de la charge ainsi établie par rapport à celle d'une électrode polycristalline en platine parfaitement plane, dont la valeur généralement admise est de 210 µC/cm². Les résultats sont reportés dans le tableau 1.
La résistance a été mesurée au moyen d'un multimètre ordinaire.
La figure 1 concerne l'électrode C₁ en platine brillant, qui n'a pas eu de revêtement d'aluminium et qui n'a pas subi de traitement thermique. La courbe en pointillé représente le premier balayage et la courbe en trait continu, qui est celle obtenue après plusieurs balayages, montre clairement les caractéristiques du platine.

Le cyclovoltammogramme représenté à la figure 2 après 20 balayages correspond à l'électrode C₁₀ et présente clairement les mêmes caractéristiques que celles du platine brillant. On observera toutefois que la fenêtre du potentiel est légèrement plus large que celle de l'électrode C₁. Du côté cathodique, les cyclovoltammogramme ont été balayé à un potentiel de 70 mV plus négatif et du côté anodique à un potentiel de 10 mV moins positif.

La figure 3 correspond au cyclovoltammogramme de l'électrode C₁₅, c'est-à-dire celle dont le film de platine a une épaisseur de 3000 Å et dont le traitement thermique a été effectué à 300°C pendant 1h. Bien qu'on retrouve clairement les caractéristiques du platine, on voit que les pics sont devenus beaucoup plus larges et que le cyclovoltammogramme présent maintenant une asymétrie dans la région hydrogène.

Comme on peut le voir dans le tableau 1, ce comportement résistif, défavorable à un usage pour un capteur électrochimique, est observé pour toutes les électrodes traitées à des températures supérieures ou égales à 300°C, voire simplement 250°C, même avec un temps de traitement pas plus grand que 1h.

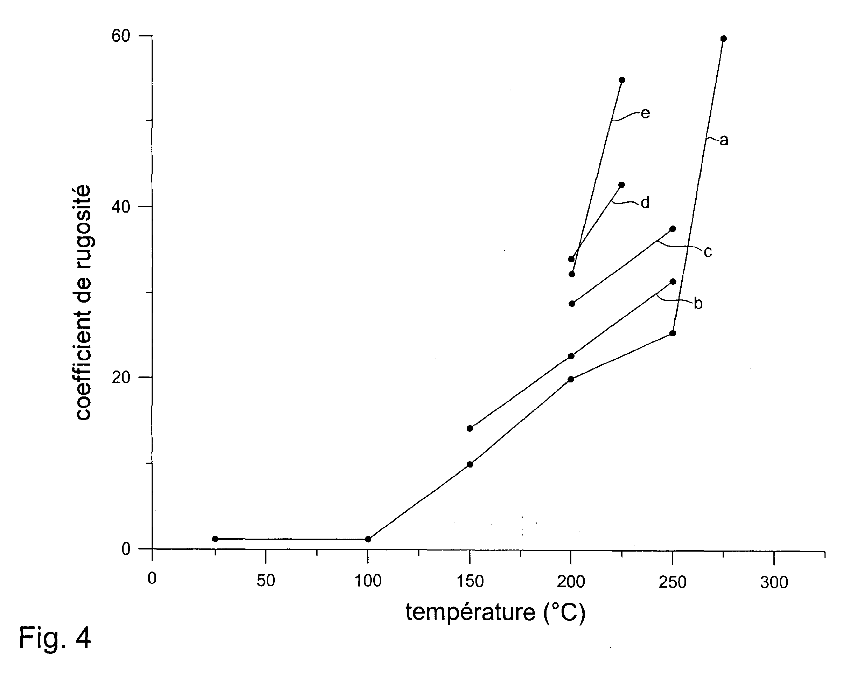

Les figures 4, 5 et 6, construites à partir des valeurs rapportées dans le tableau 1, montrent plus clairement quels choix il convient de faire au niveau des paramètres de fabrication pour obtenir un revêtement en platine brun optimisé.

La figure 4 représente, pour une électrode de type B, c'est à dire dont l'épaisseur de la couche de platine correspond à la valeur moyenne de 1500 Å, la variation du coefficient de rugosité en fonction de la température pour des temps de traitement correspondant respectivement à 2 h (courbe a), 4h (courbe b), 8h (courbe c), 16 h courbe (d) et 32 h (courbe e). On peut observer que le coefficient de rugosité augmente notablement à partir de 150° C (10,5 pour la courbe a et 14,8 pour la courbe b), température à partir de laquelle le platine prend une couleur brune. Le coefficient continue à augmenter avec l'élévation de température, ce que pouvait laisser prévoir les travaux de E. Aschauer précité.

On observera également, par exemple à la température de 200° C, que le coefficient de rugosité augmente également avec le temps de traitement, ce qui n'était pas prévisible de façon évidente à partir des travaux précités.

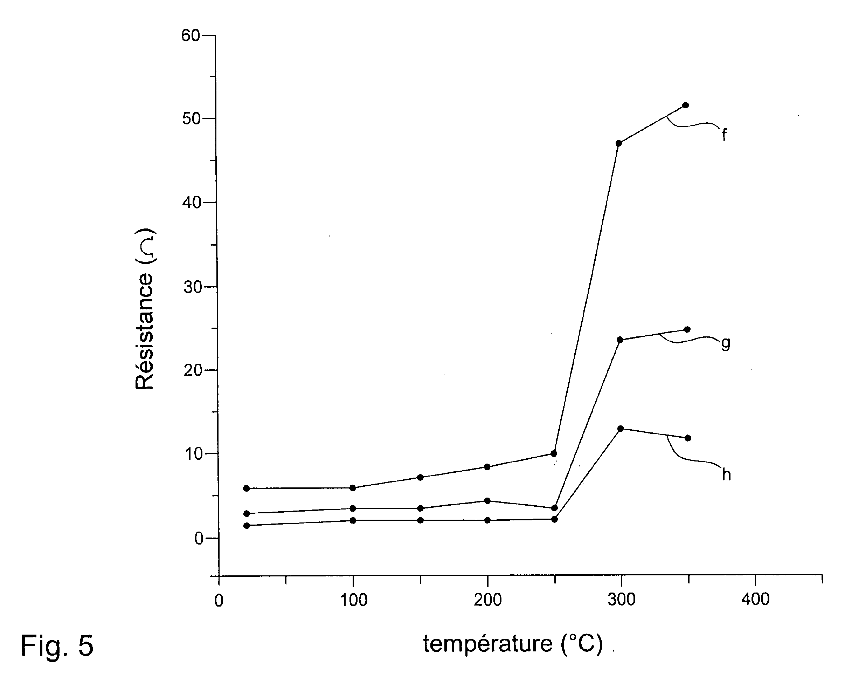

En se référant aussi à la figure 5, on a représenté la variation de la résistance en fonction de la température lorsque la durée de traitement thermique est de 2 heures, respectivement pour les électrodes du type A (courbe f), de type B (courbe g) et de type C (courbe h). On peut observer que la température de 250° C constitue très nettement un palier. Avant 250° C la résistance des électrodes ne change pratiquement pas, à l'exception de l'électrode A ayant la plus faible couche de platine et dont la résistance augmente légèrement. Au delà de 250° C la résistance fait un saut très important pour les trois types d'électrodes, ce qui est encore plus évident pour l'électrode de type A. Comme on pouvait s'y attendre, cet important saut de résistance coïncide avec l'apparition du comportement résitif observé dans les cylovaltammogrammes des échantillons.

Ainsi on peut déjà en déduire que la température du traitement thermique doit être comprise de préférence entre 150° C et 250° C et que l'épaisseur de la couche de platine doit être supérieure à 750 Å.

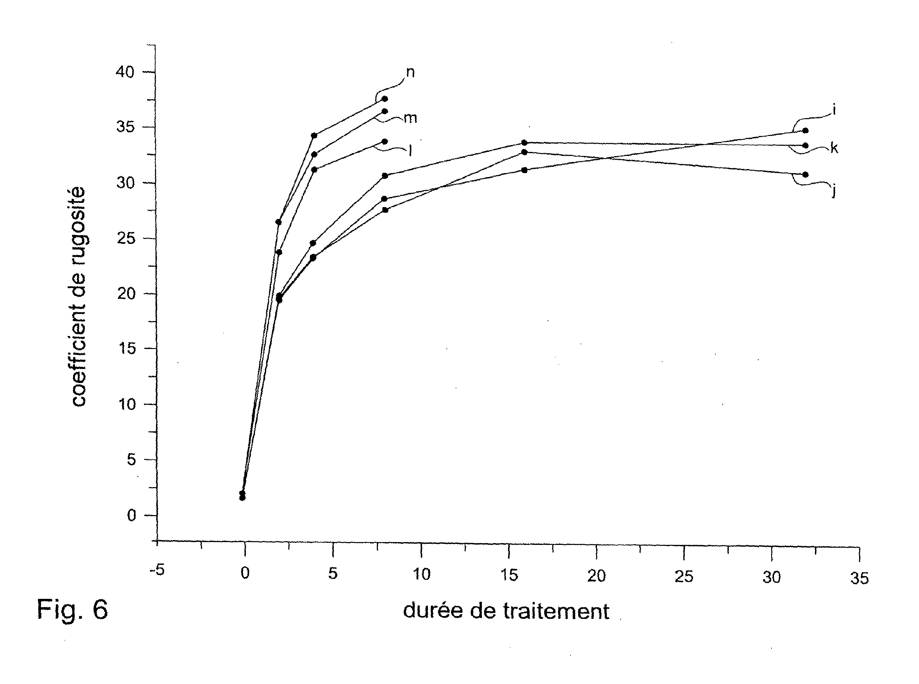

En se reportant maintenant à la figure 6, on a représenté, respectivement pour les électrodes, la variation du coefficient de rugosité en fonction de la durée du traitement thermique pour une température de 200° C (courbes i, j, k) et 220° C (courbes l, m, n). On peut observer qu'à ces températures, le coefficient de rugosité augmente d'abord rapidement avec la durée de traitement, puis tend à se stabiliser lorsque la durée de traitement dépasse 16 h. On observera également que les courbes i, j, k, et respectivement l, m, n, sont pratiquement confondues, ce qui signifie que l'épaisseur de la couche de platine a une influence pratiquement négligeable sur le paramètre "durée de traitement".

De ce qui précède, on peut en déduire que les conditions optimum pour obtenir un platine brun à coefficient de rugosité élevé correspondent à un traitement thermique à une température comprise entre 150° et 250°, de préférence environ 200°C pendant une durée d'environ 16h, la couche de platine ayant de préférence, pour des raisons économiques, une épaisseur de 1500 Å. Ainsi, comme on peut le lire dans le tableau 1, l'électrode B₈ ayant 1500 Å de platine, après un traitement thermique de 16h à 200° à un coefficient de rugosité de 33,6 et une faible résistance de 4,4 Ω. On peut également obtenir des coefficients de rugosité plus élevés, par exemple compris entre 50 et 55, en augmentant la température et la durée de traitement mais aussi l'épaisseur de la couche de platine pour éviter les risques d'augmentation de la résistance, c'est à dire dans des conditions économiquement moins intéressantes. Une illustration de cet exemple est donnée par l'électrode C₁₁ dont le coefficient de rugosité est de 50,2 et la résistance de 2 Ω.

Il est bien évident que l'homme de métier peut choisir des conditions expérimentales légèrement différentes et obtenir pour les paramètres des valeurs différentes de celles qui viennent d'être données, sans sortir du cadre de la présente invention.

**Tableau 1**

| Traitement No | Temp. de traitement (°C) | Durée de traitement (h) | Facteur rugosité | | | Résistance (Ω) | | |
|---|---|---|---|---|---|---|---|---|
| | | | A | B | C | A | B | C |
| 1 | - | - | 1,9 | 1,6 | 1,4 | 5,9 | 2,9 | 1,7 |
| 2 | 100 | 2 | 2,6 | 1,4 | 2 | 5,6 | 3,1 | 1,9 |
| 3 | 150 | 2 | 10,5 | 10,5 | 10,0 | 6,8 | 3,4 | 1,7 |
| 4 | 150 | 4 | 15,0 | 14,8 | 14,4 | 7,4 | 3,1 | 1,9 |
| 5 | 200 | 2 | 19,6 | 19,9 | 20,0 | 8,5 | 4,3 | 2 |
| 6 | 200 | 4 | 23,4 | 23,7 | 25,3 | 9,4 | 3,7 | 2,1 |
| 7 | 200 | 8 | 29,3 | 28,1 | 31,2 | 11,6 | 4,4 | 2,3 |
| 8 | 200 | 16 | 31,8 | 33,6 | 34,2 | 12,3 | 4,4 | 2,1 |
| 9 | 200 | 32 | 35,6 | 31,6 | 34,5 | 15,2 | 4,2 | 2,3 |
| 10 | 220 | 16 | 36,2 | 41,1 | 44,2 | 16,9 | 4,7 | 2,3 |
| 11 | 220 | 32 | 59,1* | 54,4 | 50,2 | 37,6 | 6 | 2 |
| 12 | 250 | 2 | 24,1 | 26,6 | 26,2 | 8,3 | 3,5 | 2 |
| 13 | 250 | 4 | 31,8 | 33,1 | 34,7 | 10 | 3,8 | 1,9 |
| 14 | 250 | 8 | 34,2 | 37,1 | 38,2 | 15,4 | 4 | 2 |
| 15 | 300 | 1 | 60,1* | 113,7* | 127,2* | 48,1 | 24,1 | 4,7 |
| 16 | 300 | 2 | 58,3* | 111,9* | 192,3* | 48,9 | 24,2 | 13 |
| 17 | 350 | 1 | 53* | 98,8* | 172,6* | 54,2 | 25,6 | 11,7 |

| | | | | | | | | |
|---|---|---|---|---|---|---|---|---|
| * : cyclovoltammogramme montrant un comportement résistif. | | | | | | | | |

## Revendications

1. Electrode à revêtement en platine modifié pour augmenter son coefficient de rugosité à une valeur comprise entre 25 et 50, **caractérisée en ce qu'**un substrat comportant un film de platine est recouvert d'une couche d'aluminium en excès, puis traité thermiquement à une température comprise entre 150°C et 250°C pendant une durée de 4 à 16h, la couche résiduelle d'aluminium étant ensuite éliminée par attaque chimique en faisant apparaître une surface d'aspect brun dû à la formation d'un alliage entre le platine et l'aluminium.

2. Electrode selon la revendication 1, **caractérisée en ce que** le film de platine a une épaisseur comprise entre 750 Å et 3000 Å, de préférence 1500 Å, lorsque la couche d'aluminium a une épaisseur de 5000 Å.

3. Electrode selon la revendication 1, **caractérisé en ce que** le traitement thermique est effectue à une température comprise entre 200°C et 220°C pendant une durée comprise entre 8 et 16h.

4. Procédé de revêtement d'une électrode en platine brun, **caractérisé en ce qu'**il comprend les étapes consistant à :
• déposer sur un substrat par évaporation par bombardement électronique ("e-gun evaporation") un film de platine
• revêtir par le même procédé le film de platine par "e-gun evaporation" d'une couche d'aluminium en excès
• effectuer un traitement thermique à une température comprise entre 150°C et 250°C pendant une durée de 4 à 16h, et
• éliminer l'aluminium résiduel par attaque chimique.

5. Procédé selon la revendication 4, **caractérisé en ce que** le substrat est préalablement revêtu par "e-gun evaporation" d'une couche d'accrochage.

6. Procédé selon la revendication 5, **caractérisé en ce que** la couche d'accrochage est formée de 200 Å de tantale.

7. Procédé selon la revendication 4, **caractérisé en ce que** le film de platine a une épaisseur comprise entre 750 Å et 3000 Å, de préférence 1500 Å lorsque la couche d'aluminium a une épaisseur de 5000 Å.

8. Procédé selon la revendication 4, **caractérisé en ce que** le traitement thermique est effectué à une température comprise entre 200°C et 220°C pendant une durée comprise entre 8 et 16h.
